# EUROPEAN PATENT SPECIFICATION

(11) **EP 1 634 416 B1**
(45) Date of publication and mention of the grant of the patent: **04.08.2010**
(21) Application number: 04754752.6
(22) Date of filing: 08.06.2004
(51) Int. Cl.: G06F 9/44, H04L 29/08, H04W 84/18

(54) **METHOD AND APPARATUS TO SHARE A SOFTWARE COMPONENT AMONG TERMINALS IN A WIRELESS AD-HOC NETWORK**
VERFAHREN UND GERÄT ZUM AUSTAUSCHEN EINER SOFTWARE-KOMPONENTE ZWISCHEN ENDGERÄTEN IN EINEM DRAHTLOSEN AD-HOC-NETZWERK
PROCEDE ET APPAREIL PERMETTANT DE PARTAGER UN COMPOSANT DE LOGICIEL ENTRE DES TERMINAUX DANS UN RESEAU SANS FIL AD HOC

(30) Priority: 10.06.2003 US 457591
(43) Date of publication of application: 15.03.2006
(73) Proprietor: Intel Corporation, Santa Clara, CA 95052-8119 (US)
(72) Inventor: BURR, Jeremy, Portland, OR 97210 (US)
(74) Representative: Dunlop, Hugh Christopher
(86) International application number: PCT/US2004/018232
(87) International publication number: WO 2004/112331

(56) References cited:
- WO-A-01/86419
- US-A- 5 726 984
- US-A1- 2002 122 410
- MISRA P: "Routing Protocols for Ad Hoc Mobile Wireless Networks" CIS OHIO, 7 February 2000 (2000-02-07), XP002173723
- KAWAGUCHI N ET AL: "MAGNET: ad hoc network system based on mobile agents" April 2000 (2000-04), COMPUTER COMMUNICATIONS, ELSEVIER SCIENCE PUBLISHERS BV, AMSTERDAM, NL, PAGE(S) 761-768 , XP004192596 ISSN: 0140-3664 the whole document
- S. CORSON; UNIVERSITY OF MARYLAND; J. MACKER; NAVAL RESEARCH LABORATORY: "Mobile Ad hoc Networking (MANET): Routing Protocol Performance Issues and Evaluation Considerations, RFC 2501" REQUEST FOR COMMENTS, NETWORK WORKING GROUP, INTERNET ENGINEERING TASK FORCE, IETF, January 1999 (1999-01), pages 1-13, XP0015008285 GENEVA, SWITZERLAND

## Description

A mobile ad hoc network (MANET) may be an autonomous system of mobile devices, for example, routers and/or associated hosts connected by wireless links, the union of which forms an arbitrary graph. The mobile devices are free to move randomly and organize themselves arbitrarily. Thus, the wireless topology of the MANET may change rapidly and unpredictably.

MANET may operate in a standalone fashion, or may be connected to the Internet. Furthermore, a device within the MANET may communicate with every other device within the MANET. The MANET protocol may define all devices as routers, and may maintain real time knowledge about the existence of all other routers within the network.

Devices within MANET (MANET nodes) may be equipped with wireless transmitters and receivers using antennas, which may be omnidirectional (Broadcast), highly-directional (point-to-point), steerable, dipole antennas, and the like. At a given point in time, depending on the nodes positions and their transmitter and receiver coverage patterns, transmission power levels and co-channel interference levels, a wireless connectivity in the form of a random, multihop graph of the "ad hoc" network exists between the nodes. This ad hoc topology may change with time as the nodes move or adjust their transmission and reception parameters.

WO 01/86419 discusses a service discovery protocol which allows clients in a distributed computing environment to search for services using flexible search criteria. US 2002/0122410 discusses a method of wireless data exchange amongst ad-hoc mobile devices in which a special communication protocol is used to support a plurality of tasks in connection with ad-hoc network abilities.

According to one aspect, the present invention provides a method as set out in claim 1. According to another aspect, the present invention provides a system as set out in claim 8.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

FIG. 1 is an illustration of a mobile ad hoc network according to exemplary embodiments of the present invention;

FIG. 2 is a block diagram of a wireless device according to an exemplary embodiment of the present invention; and

FIG. 3 is a flowchart of a method of sharing a software component according to an exemplary embodiment of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as not to obscure the present invention.

Some portions of the detailed description, which follow, are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like. For example, "plurality of mobile units" describes two or more mobile units.

It should be understood that the present invention may be used in a variety of applications. The block diagrams, methods and techniques disclosed herein may be used in many apparatuses such as units of a wireless communication system, such as for example, a cellular communication system, a hybrid wireless network, a WLAN communication system, MANET, and the like. Units of WLAN communication system intended to be included within the scope of the present invention include, by way of example only, mobile units (MU), access points (AP), public APs, a cellular device with Bluetooth capabilities, and the like. The cellular device with Bluetooth capabilities may form MANET with WLAN devices such as, for example, hand held device, personal digital assistance (PDA), and the like.

Types of WLAN communication systems intended are e.g. "IEEE-Std 802.11, 1999 Edition (ISO/IEC 8802-11:1999)" standard, and more particularly in "IEEE-Std 802.11b-1999, IEEE-Std 802.11a, IEEE-Std 802.11g, IEFE-Std 802.11j, or the like.

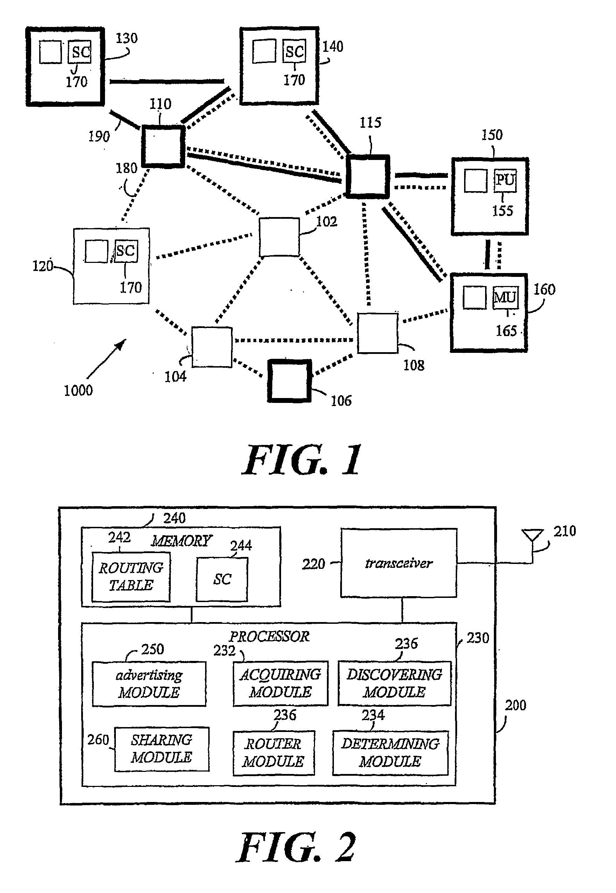

Turning to FIG. 1, a portion of a mobile ad hoc network (MANET) 1000 in accordance with exemplary embodiment of the invention is shown. MANET 1000 may include an association of associated devices 102,104,106,108,110, and 115. MANET 1000 may also include a plurality of sharing devices 120,130, 40, 150, and 160 that may be wireless devices, if desired. In this embodiment of the present invention sharing devices 120, 30 and 140 may share, among other things, a software component (SC) 170, sharing device 150 may share, among other thins, a processing unit (PU) 155 and sharing device 160 may share, among other things, a memory unit (MU) 165.

Associated devices 102, 104, 106, 108, 110 and 115 may include wireless devices and may share a mutual association as indicated by doted line 180. Furthermore, in this embodiment of the invention associated devices 110 and 115 may share another mutual association, indicated by thick line 190.

In the association of devices 102, 104, 106, 108, 110 and 115, the associated devices 102, 104, 106, 108, 110 and 115 may have and/or share similar attributes and/or applications as part of the association and may together form a sub-network, for example, MANET 1000. For example the association may be a network game, security privileges, buddies list that may be used by chat application, and the like. In addition, authentication operations may need to be performed to verify or confirm the mutual association. For example, the association may include members that perform climate data gathering for climate analysis and predictions, if desired. The mutual association may create a subset of the total devices that may be active, and which form the complete MANET 1000. The devices that share the mutual association mary share this knowledge a priori. Thus, the devices may perform a discovery and authentication process and may update the routing tables of online devices that shared the mutual association.

A new device that has similar mutual association with the other devices may be authenticated to MANET 1000. The new device may exchange its knowledge of storage capability with the nearby devices (e.g., within range) that have the mutual assaciation. Knowledge of the storage capability of the new device may be propagated across the network, via iterative and frequent exchanges of the knowledge of the devices that share the mutual association to get to nom-nearby devices, e.g., devices not within communication range. Other information may also be exchanged among the devices. For example, the devices within MANET 1000 may exchange knowledge of other devices within their respective routing tables that share the mutual association, including information about those devices' storage capabilities.

An example of sharing SC 170 by sharing device 120, which may have wireless communication capabilities, will now be described. Examples of SC 170 may include a printer driver, a computational algorithm, a security component, an operating system component, an operating system and the like. For example, computational algorithms may be downloaded on an as needed basis to perform dedicated computational tasks.

Furthermore, the operating system components may be downloaded on an as needed basis to perform specific input/output (I/O) functions. For example, a device driver for a gateway onto another network, wherein the driver may be general and un-optimized, may be dynamically optimized for the microcontroller's instruction set to improve throughput, if desired.

In addition, complete operating systems may be downloaded on an as needed basis to perform specific system level functions. In some embodiments, the operating system may download and utilize a stripped-down operating system that optimizes the gaming capabilities of the hardware device by removing much of the OS layer and running in a bare-bones environment, if desired. The operating system may be optimized, for example, for a specific local area party game, and may be further optimized for the specific hardware of a device so that a heterogeneous network of gaming devices may be formed, wherein all devices may simultaneously play the specific game.

In embodiments of the invention, sharing device 120 may include printing capabilities which may be shared with associated devices 102, 104, 106, 108, 110, 115 within the authenticated MANET 1000, if desired. Associated devices 102, 104, 106, 108, 110, 115 may be simultaneously able to communicate with the sharing device 120. SC 170 for example, a printer driver of sharing device 120, may be shared with other authenticated members of MANET 1000, e. g., devices 102, 104, 106, 108, 110, and/or 115, to create a functioning printer driver. Sharing device 120 may be authenticated on the network, and may advertise its services via methods of discovery, authentication, routing, and transmission known to one skilled in the art. For example, associated devices 110, 102, and 104 may be able to communicate with sharing device 120 directly. However, associated devices 115, 106 and 108 may communicate with sharing device 120 via intermediate devices, such as, for example, device 102 and/or device 104 and/or other intermediate devices, if desired.

Associated device 115 may print a document on sharing device 120. Associated device 115 may request a software component, e.g., the printer driver, from the sharing device 120. Communications from associated device 115 to sharing device 120 may be routed through one or more of associated devices 102, 104, 106,108, 110. A request to share SC 170 and its reply (containing SC 170) may be communicated across the MANET 1000 using the principles known to one skilled in the art via the methods of discovery, authentication, routing, and transmission. Associated device 115 may receive SC 170 and may use a Just-In-Time compiler to create a native version of the printer driver. In addition, associated device 115 may generate a printable bit-stream for communication back to the printer that may be connected to sharing device 120, if desired.

An example of sharing multiple distributed SC 170, and sharing processing capabilities of at least one sharing device and, more specifically, an example of performing a financial audit by associated devices 102, 104, 106, 108, 110, 115, which share a mutual association, will now be described.

In order to perform the financial audit, associated devices 102, 104, 106, 108, 110, 115 may share SC 170 of sharing device 120, for example, a printer driver, and SC 170 of sharing device 140, for example a financial management driver. In addition, associated devices 102, 104, 106, 108, 110, 115 may share the corporate financial data that may store on MU 165 of sharing device 160 and PU 155 of sharing device 150 to perform computing intensive calculations, if desired.

Associated devices 102, 104, 106, 108, 110, 115 may perform their financial assessments using software management applications, units, and tools provided, for example, by sharing device 140. In addition, associated devices 102, 104, 106, 108, 110, 115 may use the data obtained from corporate database stored, for example, at sharing device 160, and may use processing capabilities of sharing device 150. Associated devices 102, 104, 106, 108, 110, 115 may print documents via sharing device 120, for example, a wireless printer.

Turning now to an example of sharing, across MANET 1000, multiple distributed software components with multiple associative links. In this example, the financial data stored in MU 165 may be encrypted and the financial management software components of device 140 may require additional security authentication to decrypt the financial data. Consequently, there may be a second network overlain (shown with thick line 190) on the first network (shown with dotted line 180) specifically to share the security authentication. For example, devices 106, 110, 115, 130, 140, 150 and 160 may share an association of special security privileges that may be known a priori. However, device 106 may be unable to join the second association's network because there is no contiguous link between device 106 an one of the devices 110 and/or 115. Thus, the device properties associated with this second mutual association for device 106 may not be shared with devices 104 and 108, which do not contain the association, and consequently knowledge of these second association properties may not propagate across the network. However, the knowledge of the first mutual association properties for device 106 may propagate across the network via devices 104 and 108.

Turning to FIG. 2, a block diagram of a wireless device 200 according to an exemplary embodiment of the invention is shown. Wireless device 200 may include an antenna 210, for example a dipole antenna, omni directional antenna or the like, a transceiver 220, for example a WLAN transceiver, a processor 230, for example a baseband processor, a communication processor or the like, and a memory 240, for example a Flash memory, random access memory (RAM), or the like.

More specifically, processor 230 may include an acquiring module 232 to acquire a software component stored in another device within a wireless network based on a priori knowledge of a mutual association shared by one or more other devices within the wireless network, for example MANET 1000. Processor 230 may further include a determining module 234 to determine the route based on proximity of the one or more devices within the wireless network, for example MANET 1000. Furthermore, determining module 234 may be able to determine the route based on a proximity to one other device having the software component, for example, sharing device 120.

Processor 230 may further include a discovering module 236 to discover one or more routes to one or more online devices within the wireless network that share the mutual association, for example, security privileges. Processor 230 may further include a routing module 238 to route one or more communications between one or more online devices, for example, associated device 110 and 115 who share the mutual association of security privileges, if desired.

In alternative embodiments of the present invention, processor 230 may include acquiring module 232 and routing module 238. In those embodiments, routing module 238 may include the determining module 234 and the discovering module 236, if desired.

MANET 1000 may be a portion of a wireless network such as, for example, a WLAN network. Transceiver 220 may be a WLAN transceiver able to transmit and to receive communications of the devices of MANET 1000 that share the mutual association. Memory 240 may include a routing table 242 and processor 230 may dynamically modify routing information of one or more devices which share the mutual association based on information stored in routing table 242. Processor 230 may share the modified routing information with other devices within MANET 1000 that share the mutual association.

Wireless device 200 may be one of associate devices 102, 104, 106, 108 110 and 115 or one of the sharing devices 130 and/or 140. If wireless devices 200 is one of the sharing devices, memory 240 may include a software component (SC) 244 and processor 230 may include an advertising module 250 to advertise its services by sending messages via transceiver 220 to devices that share the mutual association. Furthermore, processor 230 may include a sharing module 260 to share SC 244 with the other devices within MANET 1000 that share the mutual association.

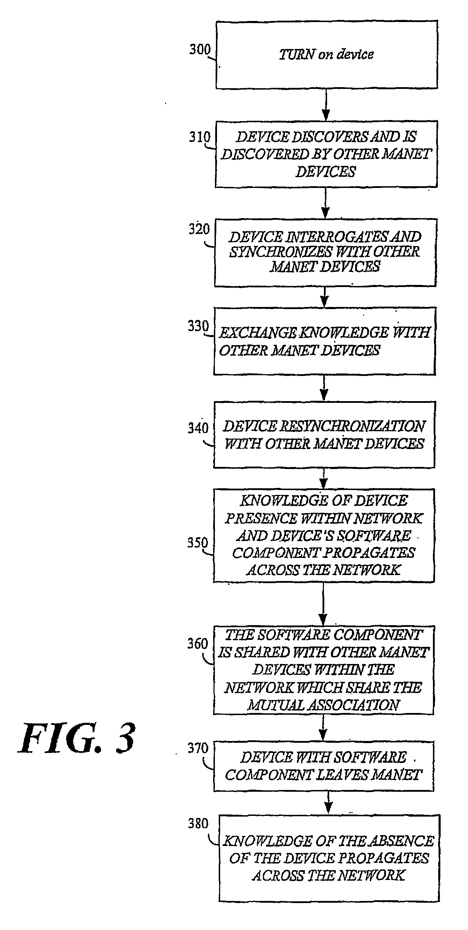

Turning to FIG. 3, a flowchart of a method of sharing software component according to an exemplary embodiment of the invention is shown. A sharing device, for example, sharing device 130 may be turned on (block 300). Sharing device 130 may discover and be discovered by devices in proximity, for example, device 110 (block 310). Device 130 may interrogate device 110 to determine a mutually acceptable synchronization period with a corresponding frequency-hopping pattern, direct sequence spreading code, or other form of communication protocol, if desired (block 320).

Coincidentally and/or subsequently, device 130 may exchange knowledge with device 110 (block 330). For example, devices 130 and 110 may share and authenticate the identifying association. Devices 130 and 110 may set up security protocols, may exchange knowledge about SC 170 capabilities, may exchange knowledge of other devices within their respective routing tables that share the mutual association, including knowledge about such other devices' SC 170 capabilities. Sharing devices 130 and 110 may update their respective routing tables with changes such as, for example, additions, subtractions or routing hop-distance changes, or routing changes based upon a cost-based algorithm, if desired.

Sharing devices 130 and 110 may subsequently, at the required interval, resynchronize to reset their mutual clocks, and determine if there is information or network updates to be passed between the two devices (block 340). Device 110 may propagate knowledge of device 130 joining the network across MANET 1000, via iterative and frequent exchange of the knowledge of online devices that share the mutual association (block 350).

Device 110 may share the software component with devices of MANET 1000 that share the mutual association (block 360), for example associated devices 102, 104, 106, 108, 115, if desired. For example, during the period when sharing device 130 is to be joined to the network, its presence may be maintained in the routing tables of the contiguous mesh of devices sharing the mutual association, and device 130 may route information to other devices which share this association within the network via these intermediate devices, based upon the routing table information.

Furthermore, during the period when device 130 may be joined to MANET 1000, other devices that share this mutual association within the network may route information via this specific device, based upon the routing table information. Device 130 may be available for servicing the requirements of the online devices that share the mutual association.

When device 130 may join MANET 1000, all information/status transfers are scheduled and delivered based upon the mutual determination of the two devices that form a device pair. For example, the information may include the latency or speed of delivery, buffering capabilities, error correction methods, and the like. The connection between devices, whether connection-oriented or connection-less service, may be determined by the device pairs at their initial interrogation, and may be subsequently revised based on changing device or network status. In addition, when device 130 leaves MANET 1000 (block 370), the frequent updates of its neighbors determine that it has left the network, and this knowledge may be propagated across the network in the respective iterative updates (block 380).

While certain features of the invention have been illustrated and described herein, many modifications, substitutions, changes, and equivalents will now occur to those skilled in the art.

## Claims

1. A method of sharing a software component (170) stored in a sharing device (120) of an association of devices that form a sub-network (1000) within a wireless ad-hoc network, the devices of the association of devices sharing at least one mutual association attribute with one or more other devices of the association, the method is **characterized by**:
acquiring said software component (170) from said sharing device (120) by an associated device (102,104,106,108,110,115) of said association based on a priori knowledge of a mutual association attribute shared by the sharing device (120) and one or more devices of the association of devices.

2. The method of claim 1, wherein acquiring comprises:
generating a routing table to indicate a route from an associated device (102,104,106,108,110,115) to the software component (170) stored in the sharing device (120).

3. The method of claim 2, wherein generating a routing table comprises:
determining the route based on a proximity of the sharing device (120) to the associated device (102,104,106,108,110,115).

4. The method of claim 1, comprising:
dynamically sharing information of the associated devices (102,104,106,108,110,115) and the sharing device (120) that share the mutual association attribute.

5. The method of claim 4, comprising:
dynamically modifying routing information to the associated devices (102,104,106,108,110,115) and the sharing device (120) that share the mutual association attribute based on the shared information.

6. The method of claim 4 comprising:
determining one or more routes to the one or more other devices within the wireless network that share the mutual association attribute.

7. The method of claim 6 comprising:
routing a communication to exchange information between one or more other online devices that share the mutual association.

8. A system comprising an association of devices that form a sub-network (1000) within a wireless ad-hoc network, the devices of the association of devices sharing at least one mutual association attribute with one or more other devices of the association, the system comprising:
a sharing device (120) for storing a software component (170) to be acquired by one or more other devices of the associated of devices;
a mobile communication devices (102,104,106,108,110,115) comprising an acquiring module for acquiring the software component (170) stored in the sharing device (120) of said association based on a priori knowledge of a mutual association attribute shared by the sharing device and one or more devices of the association of devices.

9. The system of claim 8 wherein the mobile communication device (102,104,106,108,110,115) further comprises:
a routing table for indicating a route to the software component stored in the sharing device (120).

10. The system of claim 9, wherein the mobile communication device (102,104,106,108,110,115) further comprises:
a determining module for determining the route based on the proximity between the one or more associated devices (102,104,106,108,110,115) within the wireless network.

11. The system of claim 10 wherein the determining module is operable to determine the route based on the proximity of the one or more associated devices (102,104,106,108,110,115) to the sharing device (120) having the software component (170).

12. The system of claim 8, wherein the mobile communication device (102,104,106,108,110,115) further comprises:
a discovering module for discovering one or more other associated devices (102,104,106,108,110,115) within the wireless network that share the mutual association attribute.

13. The system of claim 8, wherein the mobile communication device (102,104,106,108,110,115) further comprises:
a routing module for routing one or more communications between the one or more associated devices (102,104,106,108,110,115) that share the mutual association attribute.

14. The system of claim 8, wherein the mobile communication device (102.104,106,108,110,115) further comprises:
a processor for dynamically modifying routing information of one or more associated devices that share the mutual association based on information stored in a routing table and for sharing the modified routing information with said one or more devices which share the mutual association attribute.

15. The system of claim 14, wherein the processor comprises the acquiring module, a determining module, a discovering module and a routing module.

16. The system of claim 8, wherein the mobile communication device (102,104,106,108,110,115) further comprises:
a transceiver for transmitting and for receiving communications of the one or more devices that share the mutual association attribute.

17. A sharing device of the system as set out in any one of claims 8 to 16.

18. A mobile communication device of an association of devices as set out in any one of claims 8 to 16.

19. A computer storage medium, having instructions stored thereon, which when executed on a processor, implements the steps of the method of any of claims 1 to 7.

## Patentansprüche

1. Verfahren zur gemeinsamen Nutzung einer Softwarekomponente (170), die in einer Vorrichtung zur gemeinsamen Nutzung (120) einer Assoziation von Vorrichtungen, die ein untergeordnetes Netzwerk (1000) innerhalb eines drahtlosen Ad-Hoc-Netzwerks bilden, gespeichert ist, wobei sich die Vorrichtungen der Assoziation von Vorrichtungen mindestens ein gemeinsames Assoziationsattribut mit einem oder mehreren anderen Vorrichtungen der Assoziation teilen, wobei das Verfahren **gekennzeichnet ist durch** Erlangen der Softwarekomponente (170) von der Vorrichtung zur gemeinsamen Nutzung (120) **durch** eine assoziierten Vorrichtung (102, 104, 106, 108, 110, 115) der besagten Assoziation auf Basis einer Vorabkenntnis eines gemeinsamen Assoziationsattributs, das sich die Vorrichtung zur gemeinsamen Nutzung (120) und eine oder mehrere Vorrichtungen der Assoziation von Vorrichtungen teilen.

2. Verfahren nach Anspruch 1, wobei das Erlangen umfasst:
Erzeugen einer Weiterleitungstabelle, um eine Route von einer assoziierten Vorrichtung (102, 104, 106, 108, 110, 115) zu der in der Vorrichtung zur gemeinsamen Nutzung (120) gespeicherten Softwarekomponente (170) anzuzeigen.

3. Verfahren nach Anspruch 2, wobei das Erzeugen einer Weiterleitungstabelle umfasst:
Bestimmen der Route auf Basis einer Nähe der Vorrichtung zur gemeinsamen Nutzung (120) zu der assoziierten Vorrichtung (102, 104, 106, 108, 110, 115).

4. Verfahren nach Anspruch 1, umfassend:
dynamisches gemeinsames Nutzen von Informationen der assoziierten Vorrichtungen (102, 104, 106, 108, 110, 116) und der Vorrichtung zur gemeinsamen Nutzung (120), die sich das gemeinsame Assoziationsattribut teilen.

5. Verfahren nach Anspruch 4, umfassend:
dynamisches Modifizieren der Weiterleitungsinformationen zu den assoziierten Vorrichtungen (102, 104, 106, 108, 110, 115) und der Vorrichtung zur gemeinsamen Nutzung (120), die sich auf Basis der gemeinsam genutzten Informationen das gemeinsame Assoziationsattribut teilen.

6. Verfahren nach Anspruch 4, umfassend:
Bestimmen einer oder mehrerer Routen zu der einen oder den mehreren anderen Vorrichtungen innerhalb des drahtlosen Netzwerks, die sich das gemeinsame Assoziationsattribut teilen.

7. Verfahren nach Anspruch 6, umfassend:
Weiterleiten einer Nachricht, um Informationen zwischen einer oder mehreren anderen Online-Vorrichtungen auszutauschen, die sich die gemeinsame Assoziation teilen.

8. System, umfassend eine Assoziation von Vorrichtungen, die ein untergeordnetes Netzwerk (1000) innerhalb eines drahtlosen Ad-Hoc-Netzwerks bilden, wobei die Vorrichtungen der Assoziation von Vorrichtungen sich mindestens ein gemeinsames Assoziationsattribut mit einem oder mehreren anderen Vorrichtungen der Assoziation teilen, wobei das System umfasst:
eine Vorrichtung zur gemeinsamen Nutzung (120) zum Speichern einer von einer oder mehreren anderen Vorrichtungen der Assoziation von Vorrichtungen zu erlangenden Softwarekomponente (170);
eine mobile Kommunikationsvorrichtung (102, 104, 106, 108, 110, 115), umfassend ein erlangendes Modul zum Erlangen der in der Vorrichtung zur gemeinsamen Nutzung (120) der Assoziation gespeicherten Softwarekomponente (170) auf Basis einer Vorabkenntnis des gemeinsamen Assoziationsattributs, das sich die Vorrichtung zur gemeinsamen Nutzung und eine oder mehrere Vorrichtungen der Assoziation von Vorrichtungen teilen.

9. System nach Anspruch 8, wobei die mobile Kommunikationsvorrichtung (102, 104, 106, 108, 110, 115) ferner umfasst:
eine Weiterleitungstabelle zum Anzeigen einer Route zu der in der Vorrichtung zur gemeinsamen Nutzung (120) gespeicherten Softwarekomponente.

10. System nach Anspruch 9, wobei die mobile Kommunikationsvorrichtung (102, 104, 106, 108, 110, 115) ferner umfasst:
ein Bestimmungsmodul zum Bestimmen der Route auf Basis der Nähe zwischen dem einen oder den mehreren assoziierten Vorrichtungen (102, 104, 106, 108, 110, 115) innerhalb des drahtlosen Netzwerks.

11. System nach Anspruch 10, wobei das Bestimmungsmodul betreibbar ist, um die Route basierend auf der Nähe der einen oder der mehreren Vorrichtungen (102, 104, 106, 108, 110, 115) zu der die Softwarekomponente (170) besitzenden Vorrichtung zur gemeinsamen Nutzung (120) zu bestimmen.

12. System nach Anspruch 8, wobei die mobile Kommunikationsvorrichtung (102, 104, 106, 108, 110, 115) ferner umfasst:
ein Erkennungsmodul zum Erkennen einer oder mehrerer assoziierten Vorrichtungen (102, 104, 106, 108, 110, 115) innerhalb des drahtlosen Netzwerks, die sich das gemeinsame Assoziationsattribut teilen.

13. System nach Anspruch 8, wobei die mobile Kommunikationsvorrichtung (102, 104, 106, 108, 110, 115) ferner umfasst:
ein Weiterleitungsmodul zum Weiterleiten einer oder mehrerer Nachrichten zwischen der einen oder den mehreren assoziierten Vorrichtungen (102, 104, 106, 108, 110, 115), die sich das gemeinsame Assoziationsattribut teilen.

14. System nach Anspruch 8, wobei die mobile Kommunikationsvorrichtung (102, 104, 106, 108, 110, 115) ferner umfasst:
einen Prozessor zum dynamischen Modifizieren der Weiterleitungsinformationen einer oder mehrerer assoziierten Vorrichtungen, die sich die gemeinsame Assoziation basierend auf der in einer weiterleitungstabelle gespeicherten Informationen teilen, und zur gemeinsamen Nutzung der modifizierten Weiterleitungsinformationen mit der einen oder den mehreren Vorrichtungen, die sich das gemeinsame Assoziationsattribut teilen.

15. System nach Anspruch 14, wobei der Prozessor das erlangende Modul, ein Bestimmungsmodul, ein Erkennungsmodul und ein Weiterleitungsmodul umfasst.

16. System nach Anspruch 8, wobei die mobile Kommunikationsvorrichtung (102, 104, 106, 108, 110, 115) ferner umfasst:
einen Sende-Empfänger zum Senden und Empfangen von Nachrichten der einen oder der mehreren Vorrichtungen, die sich das gemeinsame Assoziationsattribut teilen.

17. Vorrichtung zur gemeinsamen Nutzung des Systems nach einem der Ansprüche 8 bis 16.

18. Mobile Kommunikationsvorrichtung einer Assoziation von Vorrichtungen nach einem der Ansprüche 8 bis 16.

19. Computerspeichermedium mit darin gespeicherten Anweisungen, welches bei Ausführung in einem Prozessor die Schritte des Verfahrens nach einem der Ansprüche 1 bis 7 implementiert.

## Revendications

1. Procédé de partage d'un composant logiciel (170) stocké dans un dispositif de partage (120) d'une association de dispositifs qui forment un sous-réseau (1000) dans un réseau sans fil ad-hoc, les dispositifs de l'association de dispositifs partageant au moins un attribut d'association mutuelle avec un ou plusieurs autres dispositifs de l'association, le procédé est **caractérisé par** :
l'acquisition dudit composant logiciel (170) à partir dudit dispositif de partage (120) par un dispositif associé (102, 104, 106, 108, 110, 115) de ladite association sur la base d'une connaissance a priori d'un attribut d'association mutuelle partagé par le dispositif de partage (120) et d'un ou plusieurs dispositifs de l'association de dispositifs.

2. Procédé selon la revendication 1, dans lequel l'acquisition comprend :
la génération d'une table de routage pour indiquer une route à partir d'un dispositif associé (102, 104, 106, 108, 110, 115) au composant logiciel (170) stocké dans le dispositif de partage (120).

3. Procédé selon la revendication 2, dans lequel la génération d'une table de routage comprend :
la détermination de la route sur la base d'une proximité du dispositif de partage (120) au dispositif associé (102, 104, 106, 108, 110, 115).

4. Procédé selon la revendication 1, comprenant :
le partage dynamique d'informations des dispositifs associés (102, 104, 106, 108, 110, 115) et du dispositif de partage (120) qui partagent l'attribut d'association mutuelle.

5. Procédé selon la revendication 4, comprenant :
la modification dynamique d'informations de routage aux dispositifs associés (102, 104, 106, 108, 110, 115) et au dispositif de partage (120) qui partagent l'attribut d'association mutuelle sur la base des informations partagées.

6. Procédé selon la revendication 4, comprenant :
la détermination d'une ou plusieurs routes à un ou plusieurs autres dispositifs dans le réseau sans fil qui partagent l'attribut d'association mutuelle.

7. Procédé selon la revendication 6, comprenant :
le routage d'une communication pour échanger des informations entre un ou plusieurs autres dispositifs en ligne qui partagent l'association mutuelle.

8. Système comprenant une association de dispositifs qui forment un sous-réseau (1000) dans un réseau sans fil ad-hoc, les dispositifs de l'association de dispositifs partageant au moins un attribut d'association mutuelle avec un ou plusieurs autres dispositifs de l'association, le système comprenant :
un dispositif de partage (120) pour stocker un composant logiciel (170) à acquérir par un ou plusieurs autres dispositifs des dispositifs associés ;
un dispositif de communication mobile (102, 104, 106, 108, 110, 115) comprenant un module d'acquisition pour acquérir le composant logiciel (170) stocké dans le dispositif de partage (120) de ladite association sur la base d'une connaissance a priori d'un attribut d'association mutuelle partagée par le dispositif de partage et un ou plusieurs dispositifs de l'association de dispositifs.

9. Système selon la revendication 8, dans lequel le dispositif de communication mobile (102, 104, 106, 108, 110, 115) comprend en outre :
une table de routage pour indiquer une route au composant logiciel stocké dans le dispositif de partage (120).

10. Système selon la revendication 9, dans lequel le dispositif de communication mobile (102, 104, 106, 108, 110, 115) comprend en outre :
un module de détermination pour déterminer la route sur la base de la proximité entre un ou plusieurs dispositifs associés (102, 104, 106, 108, 110, 115) dans le réseau sans fil.

11. Système selon la revendication 10, dans lequel le module de détermination est utilisable pour déterminer la route sur la base de la proximité d'un ou plusieurs dispositifs associés (102, 104, 106, 108, 110, 115) pour le dispositif de partage (120) ayant le composant logiciel (170).

12. Système selon la revendication 8, dans lequel le dispositif de communication mobile (102, 104, 106, 108, 110, 115) comprend en outre :
un module de découverte pour découvrir un ou plusieurs autres dispositifs associés (102, 104, 106, 108, 110, 115) dans le réseau sans fil qui partagent l'attribut d'association mutuelle.

13. Système selon la revendication 8, dans lequel le dispositif de communication (102, 104, 106, 108, 110, 115) comprend en outre :
un module de routage pour router une ou plusieurs communications entre un ou plusieurs dispositifs associés (102, 104, 106, 108, 110, 115) qui partagent l'attribut d'association mutuelle.

14. Système selon la revendication 8, dans lequel le dispositif de communication mobile (102, 104, 106, 108, 110, 115) comprend en outre :
un processeur pour modifier dynamiquement des informations de routage d'un ou plusieurs dispositifs associés qui partagent l'association mutuelle sur la base d'informations stockées dans une table de routage et pour partager les informatisons de routage modifiées avec lesdits un ou plusieurs dispositifs qui partagent l'attribut d'association mutuelle.

15. Système selon la revendication 14, dans lequel le processeur comprend le module d'acquisition, un module de détermination, un module de découverte et un module de routage.

16. Système selon la revendication 8, dans lequel le dispositif de communication mobile (102, 104, 106, 108, 110, 115) comprend en outre :
un émetteur-récepteur pour émettre et pour recevoir des communications d'un ou plusieurs dispositifs qui partagent l'attribut d'association mutuelle.

17. Dispositif de partage du système comme exposé dans l'une quelconque des revendications 8 à 16.

18. Dispositif de communication mobile d'une association de dispositifs comme exposé dans l'une quelconque des revendications 8 à 16.

19. Support de stockage informatique, ayant des instructions stockées sur celui-ci, qui lorsqu'elles sont exécutées sur un processeur, implémente les étapes du procédé d'une quelconque des revendications 1 à 7.
